# EUROPEAN PATENT APPLICATION

(11) **EP 4 660 872 A1**
(43) Date of publication of application: **10.12.2025**
(21) Application number: 24179852.9
(22) Date of filing: 04.06.2024
(51) Int. Cl.: G06K 7/10, G06K 17/00

(54) **APPARATUS AND METHOD FOR SCANNING AN ID IN THE TRANSPORT DIRECTION**

(71) Applicant: Anker Andersen A/S, 7160 Tørring (DK)
(72) Inventor: Eden, Kasper Heine, 7160 Tørring (DK); Michael, Gamtofte, 7160 Tørring (DK)
(74) Representative: Patrade A/S

(57) **Abstract**

The present invention relates to an apparatus for scanning an ID on an object, such as used beverage containers. The object being of a type having a top and bottom with an ID arranged on the top and/or bottom.

The apparatus comprises an optical device configured for scanning the object ID when the object is conveyed with the top or bottom in the transport direction.

The present invention furthermore relates to a use of the apparatus in an identification system for beverage bottle recovery and a method of scanning an ID on an object in motion.

## Description

### Field of the Invention

The present invention relates to an apparatus for scanning an ID on an object, such as used beverage containers, the object being of a type having a top and bottom with an ID arranged on the top and/or bottom.

The apparatus comprises an optical device configured for scanning the object ID when the object is conveyed with the top or bottom in the transport direction.

The present invention furthermore relates to a use of the apparatus in an identification system for beverage bottle recovery and a method of scanning an ID on an object in motion.

### Background of the Invention

In the search for better aesthetics and branding on beverage containers, there is a wish within the industry to omit barcodes, ID-codes etc. off the cans or bottles. However, the codes are often a necessity for stores or recycling facilities to be able to identify the container, and thus the codes must be present on the container. For branding purposes, it is desirable to arrange the codes on parts of the container normally not used for branding; such parts could include the caps/lids or tops of the containers or the bottom.

Arranging the codes on the caps/lids or tops of the containers or the bottom poses challenges, as the current systems are typically configured to scan the sides of the containers perpendicular to the transport direction to obtain scanning the containers during transport. Thus, the current systems are not configured for scanning ID-code or marks in the top or bottom arears of the containers, especially at a speed allowing it to function in line with other processing equipment.

### Object of the Invention

One objective of the present disclosure is to achieve a system overcoming the drawbacks of the prior art to achieve a system and a method for optically scanning ID-codes or comparable marks on the top or bottom of beverage container while being moved by a conveyor.

### Description of the Invention

One objective of the invention is achieved by an apparatus for scanning an ID on an object, such as used beverage containers. The object being of a type having a top and bottom and a longitudinal axis extending through top and bottom and with an ID arranged on the top and/or bottom.

The system is configured for the object to be conveyed in a transport direction with the longitudinal axis being substantial parallel to the transport direction.

The apparatus comprises an optical device with a field of view and a line of view and is configured for scanning the object ID.

The optical device is arranged with the line of view or any parallel offset lines of the line of view intersecting the longitudinal axis in an intersection point with an angle 45 degrees or less relative to the longitudinal axis when the object is conveyed in the transport direction.

The apparatus is configured to scan the object's ID when conveyed in the transport direction.

The ID may take on any optical readable form e.g. a barcode, QR-code a text string, an image or any comparable form being optically readable.

The line of view is defined as the centre of the field of view.

The preferred angle between the longitudinal axis of the object and the line of view or any parallel offset lines of the line of view is 45 degrees. 45 degrees include any direction in a rotational plane around the longitudinal axis and hence both +/- degrees.

The intersection point can be anywhere within the field of view of the optical device.

Empty beverage containers or comparable containers to be recycled typically have a weight distribution causing the container to arrange itself on a conveying device with the top and bottom being perpendicular to the transport direction.

Thus, one effect of optically scanning the object in the transport direction when conveyed in the transport direction may be that a container with an ID arranged on the top or bottom can be scanned when in motion.

Furthermore, scanning the containers when in motion speeds up the processing time of the objects for increased throughput of the apparatus.

Traditionally the ID marks of used beverage containers are placed on the side of the container parallel to the conveying direction. Thus, the traditional systems for collecting returnable or recyclable containers are typically configured to scan the sides of the containers perpendicular to the transport direction to achieve scanning the containers during transport.

This makes the ID easier to scan when handled in a conventional apparatus for returning items such as used beverage containers.

In a further embodiment, the apparatus may comprise a reflective or refractive unit for redirecting the field of view of the optical device.

The reflective or refractive unit can be of any material and any surface grade as long as the reflecting or refractive properties of the reflective or refractive unit are sufficient for the optical device to read or scan the ID code.

Including a reflective or refractive unit makes it possible to arrange the optical device in a position displaced from the longitudinal direction of the container and away from the transport direction. This may be beneficial to avoid contamination from splashes of residual fluid in/on the containers. Furthermore, this solution may be beneficial in order to avoid damaging the optical device by the objects, even in case where the objects may be mishandled by the conveyor.

Having a reflective or refractive unit may furthermore have the effect that the apparatus can be made more compact.

In a further embodiment the optical device may be a sensor arrangement, such as a camera, a laser scanner or similar.

In a further embodiment the apparatus may comprise a field of view that is substantially a cone, a line, or a beam.

In a further embodiment, the apparatus may comprise a conveyor belt for conveying the object.

The conveyor may be any kind of conveyor, as long as the object's longitudinal axis remains substantially parallel to the transport direction of the conveyor. The conveyor may be a belt conveyor, a chain conveyor, a roller conveyor or comparable devices suitable for conveying empty beverage containers.

In a further embodiment, the apparatus comprises means for aligning the object with the longitudinal axis substantially parallel to the transport direction before reaching the intersection point.

Aligning the object before reaching the intersection point may be beneficial for achieving a high throughput of objects. Misaligned objects may cause waiting time or dead-time for adjusting the container to be read. Alternatively non-readable containers may be omitted by the apparatus and hence no refund is paid. Most systems for recycling beverage containers include a loop for non-readable containers to enter the apparatus again for a second scan, or a manual station for manual scanning by hand. However, repetitions and manual scanning operations are important to reduce to a minimum, as this prolongs the process time. Furthermore, repetitions or the need for manual scanning may be an indication of a less robust system.

In a further embodiment of the apparatus, the angle between the longitudinal axis of the object and the line of view or any parallel offset lines of the line of view is 40 degrees or less, 30 degrees or less, or 15 degrees or less. The angle may be any number in between the mentioned ranges or within the mentioned ranges e.g. 36.5; 22; 17; 7; 4.3 or even 0 degrees i.e. the longitudinal axis of the object and the line of view or any parallel offset lines of the line of view are parallel.

A further objective of the invention is achieved by a method of scanning an ID on an object in motion, such as used beverage containers. The object being of a type having a top and bottom and a longitudinal axis extending through the top and bottom and with an ID arranged on the top and/or bottom.

The method comprises the acts of:
- providing an optical device with a field of view and a line of view, configured for scanning the object ID,
- defining a transport direction of the object,
- arranging the optical device with the line of view or any parallel offset lines of the line of view intersecting the longitudinal axis in an intersection point with an angle of 45 degrees or less relative to the longitudinal axis, when the object is conveyed in the transport direction,
- conveying the object in a transport direction with the longitudinal axis being substantial parallel to the transport direction, and
- scanning the object ID using the optical device when the object is conveyed in the transport direction.

The advantages achieved by the method are substantially similar to the advantages achieved by the above-described embodiments of the apparatus for scanning an ID on an object.

A further objective of the invention is achieved by use of the apparatus in an identification system for beverage container recovery.

The advantages achieved by the use are substantially similar to the advantages achieved by the above-described embodiments of the apparatus for scanning an ID on an object.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
Fig. 1 illustrates one embodiment of the apparatus.
Fig. 2 illustrates one embodiment of the apparatus with a reflecting unit changing the direction of the field of view.
Fig. 3 illustrates one embodiment of the method of scanning an ID on an object in motion.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| No | Item |
|---|---|
| 1 | Apparatus |
| 10 | Object |
| 12 | Top |
| 14 | Bottom |
| 16 | Longitudinal axis |
| 20 | ID |
| 30 | Transport Direction |
| 40 | Optical Device |
| 42 | Field of view |
| 44 | Line of view |
| 46 | Intersection Point |
| 47 | Plane of view |
| 50 | Angle |
| 51 | Reflecting unit |
| 100 | Method |
| 102 | Providing an optical device |
| 104 | Defining the transport of direction |
| 106 | Arranging the optical device |
| 108 | Conveying the object |
| 110 | Scanning the object |

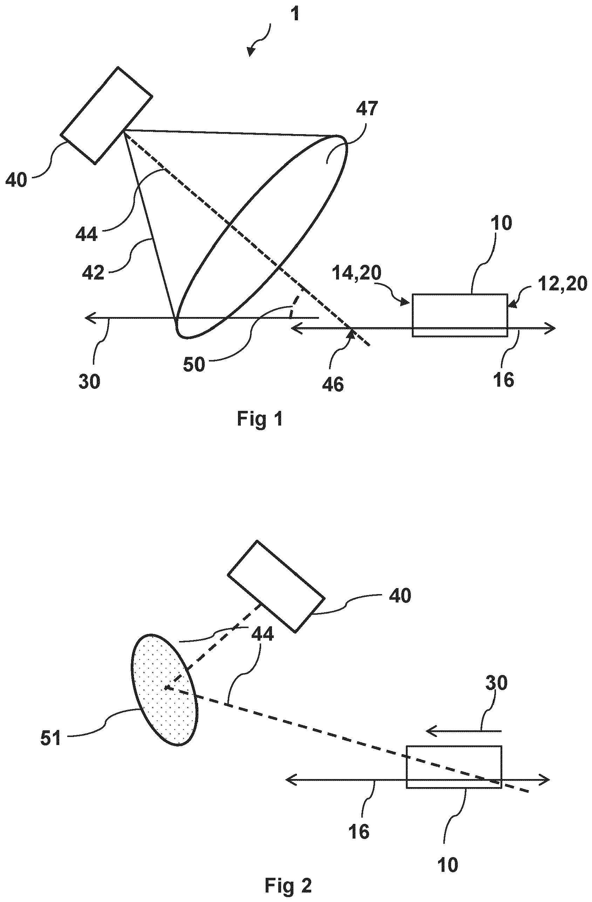

Figure 1 illustrates one embodiment of the apparatus 1 with the optical device 40 arranged above the longitudinal axis 16 of the object 10.

The object has a top 12 and a bottom 14 with an ID 20 arranged on either the top, the bottom or both. The ID is not explicitly illustrated as it may take on any optical readable form.

The object is illustrated as being transported in the transport direction 30 towards the optical device 40. When transported towards the optical device 40, the object will enter the field of view 42. In this embodiment, the line of view 44 and the longitudinal axis 16 of the object 10 intersects in an intersection point 46. The line of view and the longitudinal axis of the object are oriented with an angle 50 relative to each other.

In an alternative embodiment not illustrated, the optical device may be arranged with the object being transported away from the optical device instead of towards it.

Figure 2 illustrates one embodiment of the apparatus with a reflecting unit 51. The reflecting unit is configured to reflect the field of view 42 of the optical device 40. The object is illustrated as being transported in the transport direction 30 towards the reflecting unit to enter the field of view 42. In this embodiment, the line of view 44 and the longitudinal axis 16 of the object 10 intersects in an intersection point 46. The line of view and the longitudinal axis of the object are oriented with an angle 50 relative to each other.

In an alternative embodiment not illustrated, the reflecting unit 51 may be arranged with the object being transported away from the unit instead of towards it.

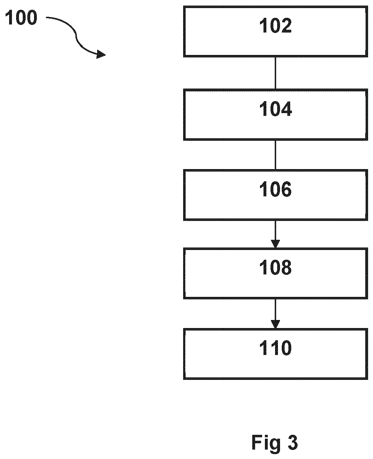

Figure 3 illustrates one embodiment of the method 100 of scanning the top 12 or bottom 14 of a beverage container. The illustrated method comprises steps of:
- providing 102 an optical device 40 with a field of view 42 and a line of view 44,
- defining 104 a transport direction 30 of the object 10, and
- arranging 106 the optical device 40.

The method furthermore includes the acts of:
- conveying 108 the object 10 in a transport direction 30 and
- scanning 110 the object ID 20.

## Claims

1. An apparatus (1) for scanning an ID (20) on an object (10), such as used beverage containers, said object being of a type having a top (12) and bottom (14) and a longitudinal axis (16) extending through top and bottom and with an ID (20) arranged on the top and/or bottom,
wherein the object (10) is conveyed in a transport direction (30) with the longitudinal axis (16) being substantial parallel to the transport direction,
wherein the apparatus comprises an optical device (40) with a field of view (42) and a line of view (44), said optical device being configured for scanning the object ID (20), wherein the optical device (40) is arranged with the line of view (44) or any parallel offset lines of the line of view intersecting the longitudinal axis (16) in an intersection point (46) with an angle (50) of 45 degrees or less relative to the longitudinal axis (16) when the object is conveyed in the transport direction (30), and
wherein the apparatus is configured to scan the object's ID when conveyed in the transport direction.

2. The apparatus according to claim 1 comprising a reflective or refractive unit (51) for redirecting the line of view (42) of the optical device.

3. The apparatus (1) according to any one or more of the preceding claims, wherein the optical device (40) is a sensor arrangement, such as a camera, a laser scanner or similar.

4. The apparatus (1) according to any one or more of the preceding claims, wherein the field of view (42) is substantially a cone, a line, or a beam.

5. The apparatus (1) according to any one or more of the preceding claims comprising a conveyor belt for conveying the object.

6. The apparatus (1) according to any one or more of the preceding claims, comprising alignment means for aligning the object with the longitudinal axis (16) substantially parallel to the transport direction (30) before reaching the intersection point (46).

7. The apparatus (1) according to any one or more of the preceding claims, wherein the angle (50) is 40 degrees or less, 30 degrees or less, or 15 degrees or less.

8. Method (100) of scanning an ID (20) on an object (10) in motion, such as used beverage containers, said object being of a type having a top (12) and bottom (14) and a longitudinal axis (16) extending through top and bottom and with an ID (20) arranged on the top and/or bottom, said method comprising acts of:
- providing (102) an optical device (40) with a field of view (42) and a line of view (44) and configured for scanning the object ID (20),
- defining (104) a transport direction (30) of the object,
- arranging (106) the optical device (40) with the line of view (44) or any parallel offset lines of the line of view (44) intersecting the longitudinal axis (16) in an intersection point (46) with an angle (50) of 45 degrees or less relative to the longitudinal axis (16), when the object is conveyed in the transport direction (30),
- conveying (108) the object (10) in a transport direction (30) with the longitudinal axis (16) being substantial parallel to the transport direction, and
- scanning (110) the object ID using the optical device when the object is conveyed in the transport direction (30).

9. Use of the apparatus according to any one or more of claims 1-7 in an identification system for beverage container recovery.
